Europäisches Patentamt

(19) European Patent Office

Office européen des brevets

(11) Publication number : **0 422 465 B1**

(12) **EUROPEAN PATENT SPECIFICATION**

(45) Date of publication of patent specification :
02.02.94 Bulletin 94/05

(51) Int. Cl.⁵ : **F16D 27/07**, F16D 27/10,
H02K 49/04

(21) Application number : **90118700.5**

(22) Date of filing : **28.09.90**

(54) **Electromagnetic clutch.**

(30) Priority : **12.10.89 JP 118775/89 U**

(43) Date of publication of application :
**17.04.91 Bulletin 91/16**

(45) Publication of the grant of the patent :
**02.02.94 Bulletin 94/05**

(84) Designated Contracting States :
**DE FR GB IT SE**

(56) References cited :
**EP-A- 0 105 789**

(56) References cited :
**PATENT ABSTRACTS OF JAPAN vol. 007, no.
199 (M-240)(1344) 03 September 1983, & JP-
A-58 098659 (NISSAN JIDOSHA K.K.) 11 June
1983
PATENT ABSTRACTS OF JAPAN vol. 008, no.
284 (M-348)(1721) 26 December 1984, & JP-
A-59 151628 (KIYANON DENSHI K.K.) 30 Aug-
ust 1984**

(73) Proprietor : **SANDEN CORPORATION
20 Kotobuki-cho
Isesaki-shi Gunma, 372 (JP)**

(72) Inventor : **Uehara, Fumiaki, c/o Sanden
Corporation
20 Kotobuki-cho, Isesaki-shi
Gunma 372 (JP)**

(74) Representative : **Prüfer, Lutz H., Dipl.-Phys.
Harthauser Strasse 25d
D-81545 München (DE)**

EP 0 422 465 B1

## Description

This invention generally relates to an electromagnetic clutch, such as for use in controlling the transmission of power from an automobile engine to a refrigerant compressor in an automobile air conditioning system, and more particularly, to a friction surface of the electromagnetic clutch.

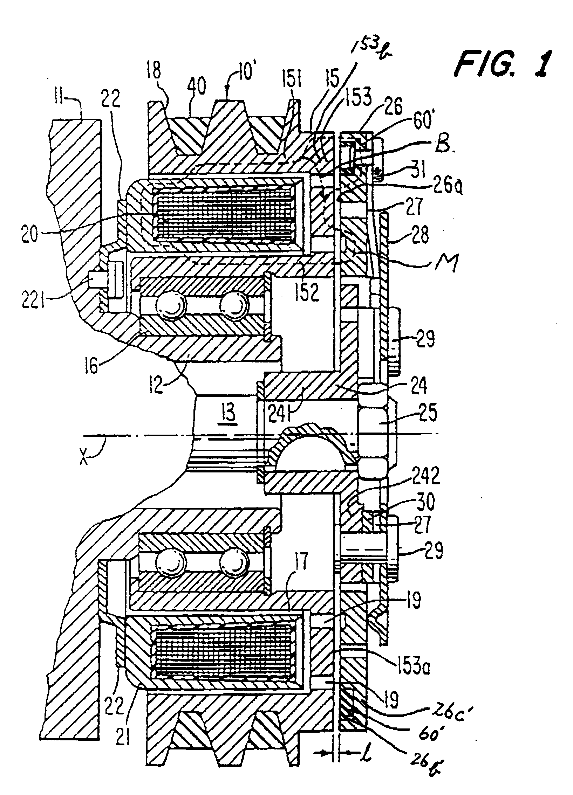

An embodiment of Japanese Utility Model Application Publication No. 52-151258 is essentially illustrated in Figure 1. Electromagnetic clutch 10' is intended to be coupled to a refrigerant compressor in an automobile air conditioning system. Compressor housing 11 is provided with a cantilevered tubular extension 12 surrounding an extension of drive shaft 13 of the compressor. Drive shaft 13 is rotatably supported in the compressor housing 11 by bearings (not shown). Axis X is the horizontal axis about which hub 24, armature plate 26, and clutch rotor 15 rotate.

Clutch rotor 15 is rotatably supported on tubular extension 12 through bearing 16 which is mounted on the outer surface of tubular extension 12. Clutch motor 15 is made of magnetic material, such as steel, and comprises outer annular cylindrical portion 151, inner annular cylindrical portion 152 and axial end plate portion 153, which connects outer and inner cylindrical portions 151 and 152 at the axial forward end (to the right in Figure 1). Annular U-shaped cavity 17 is defined by portion 151, 152 and 153. A plurality of V-shaped grooves 18 are provided on the outer peripheral surface of outer annular cylindrical portion 151 for receiving belt 40 to couple the compressor to the output of the automobile engine (not shown).

Axial end plate portion 153 includes one or more concentric slits 19 which are disposed on one or more concentric circles. These slits 19 define a plurality of annular or arcuate magnetic pieces with the surface of the poles being on the axial end plate portion 153.

Electromagnetic coil 20 is disposed in annular cavity 17 of clutch rotor 15 to supply magnetic flux, shown by a dashed line "M", for attracting armature plate 26 to axial end plate portion 153 of rotor 15. Coil 20 is contained within annular magnetic housing 21 having a U-shaped cross section. Housing 21 is fixed to supporting plate 22, which is secured to the axial end surface of compressor housing 11 by a plurality of rivets 221. A small air gap is maintained between coil housing 21 and clutch rotor 15.

Hub 24 is disposed on the terminal end of drive shaft 13. Hub 24 is secured to drive shaft 13 by nut 25. The hub 24 comprises tubular member 241 secured on the terminal end of drive shaft 13 and flange portion 242 extending radially from the axial end of tubular member 241. Flange portion 242 is integrally formed with tubular member 241. Alternatively, flange portion 242 may be formed separately from the tubular member 241 and fixed on the tubular member 241 by any known securing method, for example, by welding.

Annular armature plate 26 is composed of magnetic material, is concentric with hub 24, and faces the axial end plate 153 with a predetermined axial air gap "1" therebetween. Armature plate 26 is elastically connected to flange portion 242 of hub 24 through a plurality of leaf springs 27. Armature plate 26 includes friction surface 26a facing friction surface 153a of axial end plate portion 153 of rotor 15. Stopper plate 28 and one end of each leaf spring 27 are secured by rivets 29 to the outer surface of flange portion 242 through spacing member 30. The other end of each leaf spring 27 is fixed to armature plate 26 by rivet 31 to support armature plate 26 flexibly for axial movement upon deflection of leaf spring 27.

Thus, when electromagnetic coil 20 is energized, armature plate 26 is attracted to axial end plate portion 153 of rotor 15, and thus friction surfaces 26a and 153a engage each other. Drive shaft 13 is then rotated together with rotor 15 by the engine output through leaf spring 27 and hub 24.

When electromagnetic coil 20 is not energized, armature plate 26 is separated from rotor 15 due to the elasticity of leaf springs 27. Rotor 15 is thus rotated by the engine output, but the compressor is not driven.

To enhance the torque transmission from the rotor to the armature plate, annular friction member 60' of non-magnetic material is fixedly disposed within annular groove 26b' formed near the radially-outermost edge of friction surface 26a of armature plate 26. A top end surface (to the left in Figure 1) of friction member 60' slightly projects with respect to friction surface 26a of armature plate 26. However, the top end surface of friction member 60' can be considered to be substantially flush with friction surface 26a of armature plate 26. Since the thickness of friction member 60' is required to be relatively large in consideration of the stability of friction member 60' and easiness of the forming process of friction member 60', the depth of annular groove 26b' is required to be relatively large. Therefore, the thickness of the annular portion 26c' of armature plate 26 at a location of annular groove 26b' becomes small so that the magnetic resistance at the annular portion 26c' of armature plate 26 is increased.

Accordingly, the number of magnetic lines of flux which radially penetrates through annular portion 26c' of armature plate 26 is decreased, thereby diminishing the electromagnetic attraction generated by the unit electric power.

Furthermore, if the above defect is solved by increasing the thickness of the armature plate, it is then replaced by another defect, such as increase in the weight of the electromagnetic clutch.

Still furthermore, in this prior art, reduction of the amount of leakage flux, shown by a dotted line "B", at radial outer region 153b of axial end plate portion 153 is not considered.

Accordingly, it is an object of this invention to provide an electromagnetic clutch that does not unnecessarily reduce the number of magnetic lines of flux that radially penetrate through an armature plate without increasing the weight thereof.

An electromagnetic clutch includes a first rotatable member of magnetic material, such as a clutch rotor, and a second rotatable member, such as a drive shaft. An annular armature plate of magnetic material is joined to the second rotatable member so that the armature plate can axially move within a limited range. A friction surface of the armature plate faces a friction surface of the first rotatable member with an axial air gap therebetween. An annular friction member of non-magnetic material is fixedly disposed on the friction surface of the armature plate.

An electromagnetic device is associated with the first rotatable member for attracting the armature plate to the friction surface of the first rotatable member so that rotation of the first rotatable member can be transmitted to the second rotatable member through the armature plate by the operation of the electromagnetic device.

The annular friction member includes one end surface which faces to the friction surface of the first rotatable member. The one end surface of the annular friction member is apart from the friction surface of the armature plate with a sufficient distance.

The first rotatable member includes an annular groove formed at the friction surface thereof so as to receive the friction member.

Figure 1 illustrates a side elevational sectional view of an electromagnetic clutch in accordance with a prior art device.

Figure 2 illustrates a side elevational sectional view of an electromagnetic clutch in accordance with a first embodiment of the present invention.

Figure 3 illustrates a fragmentary sectional view of the electromagnetic clutch shown in Figure 2.

Figure 4 is a similar view to Figure 3 illustrating an electromagnetic clutch in accordance with a second embodiment of the present invention.

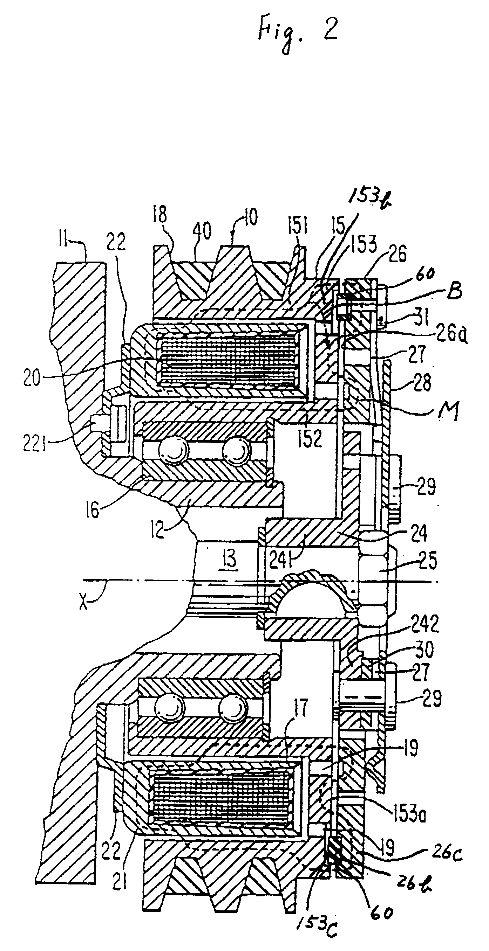

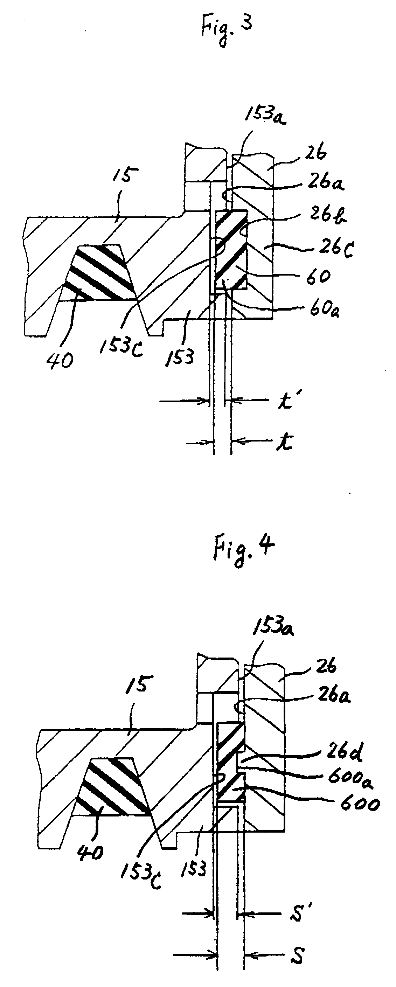

Referring to Figures 2 and 3, electromagnetic clutch 10 in accordance with a first embodiment of the present invention is shown. In Figures 2 and 3, the same numerals are used to denote the corresponding elements shown in Figure 1, thus an explanation thereof is omitted.

Annular friction member 60 of non-magnetic material, for example, aromatic polyamide resin fiber (name "Kevlar" as a trademark) in molded phenol resin is fixedly disposed in annular groove 26b formed proximate to the radially-outermost edge of friction surface 26a of armature plate 26. A top end surface (to the left in Figures 2 and 3) of friction member 60 sufficiently projects with respect to friction surface 26a of armature plate 26. Axial end plate portion 153 of clutch rotor 15 is provided with annular groove 153c at proximate radial outer region 153b to receive top end portion 60a of friction member 60 projecting with respect to friction surface 26a of armature plate 26. Therefore, the depth of annular groove 26b can be designed to be small, that is, the thickness of annular portion 26c of armature plate 26 can be designed to be thick even though the thickness of friction member 60 is relatively large.

In this construction, the relation between the distance "t" between the top end surface of annular friction member 60 and friction surface 26a of armature plate 26 and the depth "t'" of annular groove 153c can be given the following formula.

$$t > t' \quad (1)$$

Therefore, the top end surface of annular friction member 60 sufficiently engages with a bottom surface of annular groove 153c, thereby, enhancing the torque transmission from the rotor to the armature.

Furthermore, since the thickness of annular portion 26c of armature plate 26 can be designed to be thick, magnetic resistance at annular portion 26c of armature plate 26 is reduced. Accordingly, the number of magnetic lines of flux which radially penetrate through annular portion 26c of armature plate 26 is increased, thereby the electromagnetic attraction generated by the unit electric power becomes large without increasing the weight of armature plate 26.

Still furthermore, since annular groove 153c is formed at radial outer region 153b of axial end plate 153, magnetic resistance at radial outer region 153b of axial end plate 153 is increased. Thereby, the amount of leakage flux "B" is reduced.

Referring to Figure 4 which illustrates a second embodiment of the present invention, armature plate 26 is provided with annular projection 26d formed near the radially-outermost edge of friction surface 26a of armature plate 26 to fit with annular groove 600a formed at the center of a bottom end surface (to the right in Figure 4) of annular friction member 600. In this embodiment, annular friction member 600 is fixedly connected to friction surface 26a of armature plate 26 by a forcible insertion of annular projection 26d of armature plate 26 into annular groove 600a of friction member 600. The relation between the height "s" of friction member 600 and the depth "s'" of annular groove 153c can be given the following formula.

$$s > s' \quad (2)$$

An effect of the second embodiment is substantially similar to the effect of the first embodiment so that explanation thereof is omitted

Although friction member 60 has been described as an annular friction member, the invention is not limited in this respect. For example, the annular friction member may be formed as a plurality of arcuate portions disposed at a predetermined positions on the armature plate.

This invention has been described in detail in connection with the preferred embodiment, but the preferred embodiments are an example only and this invention is not restricted thereto. It will be easily understood by those skilled in the art that other variations and modifications can be easily made within the scope of the invention, which is defined by the appended claims.

**Claims**

1. An electromagnetic clutch comprising:

a first rotatable member (15) comprising magnetic material and including a first friction surface (153a) associated therewith;

a second rotatable member (24);

an annular magnetic armature plate (26) coupled to said second rotatable member so as to be capable of limited axial movement, said annular magnetic armature plate (26) including a second friction surface (26a) associated therewith and arranged so as to face said first friction surface with an axial air gap therebetween;

electromagnetic means associated with said first rotatable member and said annular magnetic armature plate for attracting said second friction surface to said first friction surface such that rotational force may be transmitted to said second rotatable member; and

a friction member (60) of non-magnetic material fixedly disposed at said second friction surface of said annular magnetic armature plate (26), said friction member having one end surface facing said first friction surface of said first rotatable member, said one end surface of said friction member being spaced from said second friction surface of said annular magnetic armature plate by a sufficient distance,

characterized in that said first rotatable member (15) is provided with a first annular groove (153c) formed at said first friction surface (153a) so as to receive said friction member (60).

2. The electromagnetic clutch in accordance with claim 1, wherein said annular magnetic armature plate (26) comprises a second annular groove formed at said second friction surface (26a) so as to receive a part of said friction member (60).

3. The electromagnetic clutch in accordance with claim 2, wherein said friction member has an annular shape.

4. The electromagnetic clutch in accordance with claim 1, wherein said friction member (600) and said annular magnetic armature plate (26) are fixedly connected by forcible insertion of an annular projection (26d) formed at said second friction surface of said annular magnetic armature plate into a third annular groove (600a) formed at the other end surface of said annular friction member (600).

5. The electromagnetic clutch in accordance with claim 4, wherein said friction member has an annular shape.

**Patentansprüche**

1. Elektromagnetische Kupplung mit:

einem ersten drehbaren Teil (15) mit magnetischem Material und mit einer damit verbundenen ersten Reibungsoberfläche (153a);

einem zweiten drehbaren Teil (24);

einer mit dem zweiten drehbaren Teil so verbundenen ringförmigen magnetischen Ankerplatte (26), daß sie zu einer begrenzten axialen Bewegung fähig ist, wobei die ringförmige magnetische Ankerplatte (26) eine damit verbundene Reibungsoberfläche (26a) aufweist, die so angeordnet ist, daß sie der ersten Reibungsoberfläche mit einem axialen Luftspalt dazwischen zugewandt ist;

einem mit dem ersten drehbaren Teil und der ringförmigen magnetischen Ankerplatte verknüpften elektromagnetischen Mittel zum Anziehen der zweiten Reibungsoberfläche zu der ersten Reibungsoberfläche derart, daß Rotationskraft zu dem zweiten drehbaren Teil übertragen werden kann; und

einem Reibungsteil (60) aus nichtmagnetischem Material, das fest an der zweiten Reibungsoberfläche der ringförmigen magnetischen Ankerplatte (26) vorgesehen ist, wobei das Reibungsteil eine Endoberfläche aufweist, die der ersten Reibungsoberfläche des ersten drehbaren Teiles zugewandt ist, die eine Endoberfläche des Reibungsteiles in einem ausreichenden Abstand von der zweiten Reibungsoberfläche der ringförmigen Ankerplatte angeordnet ist;

dadurch gekennzeichnet, daß das erste drehbare Teil (15) mit einer ersten ringförmigen Rille (153c) versehen ist, die an der ersten Reibungsoberfläche (153a) so gebildet ist, daß sie das Reibungsteil (60) aufnimmt.

2. Elektromagnetische Kupplung nach Anspruch 1, bei der die ringförmige magnetische Ankerplatte (26) eine zweite ringförmige Rille aufweist, die an der zweiten Reibungsoberfläche (26a) so gebildet ist, daß sie einen Teil des Reibungsteiles (60) aufnimmt.

3. Elektromagnetische Kupplung nach Anspruch 2, bei der das Reibungsteil eine ringförmige Form aufweist.

4. Elektromagnetische Kupplung nach Anspruch 1, bei der das Reibungsteil (600) und die ringförmige magnetische Ankerplatte (26) fest durch zwangsweises Einführen eines ringförmigen Vorsprunges (26d) der an der zweiten Reibungsoberfläche der ringförmigen magnetischen Ankerplatte gebildet ist, in eine dritte ringförmige Rille (600a), die an der anderen Endoberfläche des ringförmigen Reibungsteiles (600) gebildet ist, miteinander verbunden sind.

5. Elektromagnetische Kupplung nach Anspruch 4, bei der das Reibungsteil eine ringförmige Form aufweist.

**Revendications**

1. Embrayage électromagnétique comprenant :
   un premier élément rotatif (15) constitué en un matériau magnétique et présentant une première surface de friction (153a) qui lui est associée ;
   un second élément rotatif (24) ;
   une plaque d'armature magnétique annulaire (26) accouplée audit second élément rotatif de façon à pouvoir subir un mouvement axial limité, ladite plaque d'armature magnétique annulaire (26) comportant une seconde surface de friction (26a) qui lui est associée et disposée en face de ladite première surface de friction en ménageant entre elles un certain espace d'air axial ;
   un moyen électromagnétique associé audit premier élément rotatif et à ladite plaque d'armature magnétique annulaire pour attirer ladite seconde surface de friction vers ladite première surface de friction de manière que la force de rotation puisse être transmise audit second élément rotatif ; et
   un élément à friction (60) en matériau non magnétique disposé rigidement sur ladite seconde surface de friction de ladite plaque d'armature magnétique annulaire (26), ledit élément à friction ayant une première surface d'extrémité orientée face à ladite première surface de friction dudit premier élément rotatif, ladite première surface d'extrémité dudit élément à friction étant espacée de ladite seconde surface de friction de ladite plaque d'armature magnétique annulaire par une distance suffisante,
   caractérisé en ce que ledit premier élément rotatif (15) comporte une première rainure annulaire (153c) pratiquée sur ladite première surface de friction (153a) de manière à recevoir ledit élément à friction (60).

2. Embrayage électromagnétique selon la revendication 1, dans lequel ladite plaque d'armature magnétique annulaire (26) comporte une seconde rainure annulaire pratiquée sur ladite seconde surface de friction (26a) de manière à recevoir une partie dudit élément à friction (60).

3. Embrayage électromagnétique selon la revendication 2, dans lequel ledit élément à friction est de forme annulaire.

4. Embrayage électromagnétique selon la revendication 1, dans lequel ledit élément à friction (600) et ladite plaque d'armature magnétique annulaire (26) sont rigidement reliés par l'insertion à force d'une saillie annulaire (26d) formée sur ladite seconde surface de friction de ladite plaque d'armature magnétique annulaire à l'intérieur d'une troisième rainure annulaire (600a) pratiquée sur l'autre surface d'extrémité dudit élément annulaire à friction (600).

5. Embrayage électromagnétique selon la revendication 4, dans lequel ledit élément à friction est de forme annulaire.

FIG. 1

Fig. 2

Fig. 3

Fig. 4